# EUROPÄISCHE PATENTSCHRIFT

(11) **EP 3 127 679 B1**
(45) Veröffentlichungstag und Bekanntmachung des Hinweises auf die Patenterteilung: **26.09.2018**
(21) Anmeldenummer: 16182664.9
(22) Anmeldetag: 03.08.2016
(51) Int. Cl.: B29C 45/14

(54) **VORRICHTUNG UND VERFAHREN ZUR HERSTELLUNG EINES KUNSTSTOFF-SPRITZGUSSTEILS MIT DEKOREINLAGE**
DEVICE AND METHOD FOR PRODUCING A PLASTIC INJECTION MOULDING PART WITH DECORATIVE INSERT
DISPOSITIF ET PROCEDE DE FABRICATION D'UNE PIECE MOULEE PAR INJECTION DE PLASTIQUE COMPRENANT UN ELEMENT DECORATIF

(30) Priorität: 05.08.2015 DE 102015112836
(43) Veröffentlichungstag der Anmeldung: 08.02.2017
(73) Patentinhaber: Veeser Plastic-Werk GmbH & Co. KG, 78467 Konstanz (DE)
(72) Erfinder: MEISTER, Stefan, 78315 Radolfzell (DE); BRUNTSCH, Arne, 78253 Eigeltingen (DE); TOBIAS, Marc, 88048 Friedrichshafen (DE)
(74) Vertreter: Heisel, Wolfgang

(56) Entgegenhaltungen:
- EP-A2- 0 328 038
- DE-U1- 20 105 033
- GB-A- 980 617

## Beschreibung

### Technisches Gebiet

Die Erfindung bezieht sich auf ein Verfahren zur Herstellung eines Kunststoff-Spritzgussteils mit einer insbesondere kleinen Dekoreinlage.

### Stand der Technik

Spritzgussteile mit Dekoreinlage sind in vielfältigen Formen bekannt. Beispielsweise sind ein Verfahren und eine Vorrichtung zum In-Mold-Dekorieren bekannt. Es ist bekannt, durch Spritzgießen hergestellte Kunststoffspritzteile beim Spritzgießen mit einer Dekorlage zu versehen, wobei eine sogenannte In-Mold-Decoration-Folie (IMD = In-Mold-Decoration) in das Spritzgießwerkzeug eingelegt wird und die Dekorlage der IMD-Folie auf die Oberfläche des Kunststoffspritzteils vollflächig übertragen wird. Die IMD-Folie ist ähnlich aufgebaut wie eine Heißprägefolie, wobei die Dekorlage lösbar, insbesondere mittels einer Ablöseschicht, auf einer Trägerfolie angeordnet ist, und wobei die Dekorlage weiterhin eine wärmeaktivierbare Kleberschicht aufweist. Weiter ist es bekannt, sogenannte In-Mold-Labeling- oder Insert-Molding-Formteile in Spritzgießformen einzulegen. Das IML-Formteil (IML = In-Mold-Labeling) ist ein dekoriertes Einlegeteil, bei dem eine Einlegeteildekorlage auf eine sogenannte Backingfolie thermokaschiert und/oder heißgeprägt und/oder aufgedruckt ist. Das IML-Formteil kann im Tiefziehverfahren vorgeformt sein und sodann ausgestanzt oder ausgeschnitten sein.

Das IML-Formteil kann entweder ein flaches Einlegeteil (Inmold Labeling) oder ein relativ zu einer Bezugsebene dreidimensional verformtes bzw. vorgeformtes Einlegeteil (Insert Molding) sein.

Das Verfahren zur Herstellung eines mittels In-Mold-Decoration (IMD) und In-Mold-Labeling (IML) dekorierten Formteils umfasst eine Spritzgießvorrichtung, die eine dekorseitige und eine kernseitige Werkzeughälfte aufweist, wobei die dekorseitige Werkzeughälfte bewegbar und die kernseitige Werkzeughälfte gestellfest ausgebildet ist, umfassend folgende Verfahrensschritte:
a) Einbringen einer IMD-Folie in eine durch eine dekorseitige Formfläche ausgebildete Formausnehmung der dekorseitigen Werkzeughälfte und Fixieren der IMD-Folie;
b) Einlegen eines IML-Formteils in eine durch eine kernseitige Formfläche ausgebildete Formausnehmung der kernseitigen Werkzeughälfte und Fixieren des IML-Formteils, wobei das IML-Formteil eine Einlegeteildekorlage und eine Backingfolie umfasst;
c) Schließen der Spritzgießvorrichtung durch Absenken der dekorseitigen Werkzeughälfte auf die kernseitige Werkzeughälfte;
d) Einspritzen eines flüssigen thermoplastischen Spritzgießmaterials in die Formausnehmung der kernseitigen Werkzeughälfte, wobei das flüssige Spritzgießmaterial das IML-Formteil gegen die IMD-Folie in der Formausnehmung der dekorseitigen Werkzeughälfte drückt;
e) Öffnen der Spritzgießvorrichtung nach Ablauf einer Abkühlzeit des Formteils;
f) Entnahme des dekorierten Formteils.

Die vorzugsweise als Bahn oder Streifen vorliegende IMD-Folio kann beispielsweise mit einer Folienvorschubeinrichtung durch die Spritzgieß-Vorrichtung geführt sein. Die Folienvorschubeinrichtung kann eine Vorratsrolle für die IMD-Folie, eine Aufwickelrolle für die Restfolie, eine Transporteinrichtung für den schrittweisen Transport der IMD-Folie sowie eine Fixiereinrichtung zum Festlegen der zugeführten IMD-Folie an der dekorseitigen Werkzeughälfte umfassen. Die IMD-Folie kann, vorzugsweise an ihrem äußeren Rand, Registermarken aufweisen, die von einem vorzugsweise optischen Lagesensor an der Spritzgieß-Vorrichtung detektiert werden.

Eine andere weitere Ausführungsform des Standes der Technik sieht vor, zunächst das Spritzgussteil fertigzustellen, und in einem weiteren Arbeitsschritt - außerhalb der Spritzgussform - das Dekorteil in eine dafür vorgesehene Ausnehmung einzubringen. Mit einem Klebstoff, vorzugsweise einen UV-aushärtenden Klebstoff wird das Dekorteil unverlierbar in der Ausnehmung fixiert.

Solche Dekorteile werden beispielsweise dafür verwendet, lumineszierte transparente Kunststoffteile in definierten Bereichen abzudecken, so dass beispielsweise eine Abbildung oder ein Schriftzug entsteht. Ein Anwendungsbeispiel dafür sind Einlagen in beleuchtete Trittschwellen bei Kraftfahrzeugen oder Zügen und Flugzeugen.

Aus der DE 201 05 033 U1 ist ein Spritzgusswerkzeug bekannt, das zur Herstellung von Kleinfiltern aus Kunststoff geeignet ist. Diese Spritzgussform besteht aus zwei Spritzgusshälften sowie einer Stempelvorrichtung. Die Stempelvorrichtung umfasst einen Stempel, der von einer Stanzhülse umgeben ist. Stempel und Stempelhülse werden durch die Spritzgussform geführt. Nach dem Stanzvorgang durch die Stanzhülse sowie der Positionierung an der Spritzposition sowie der Gegenpositionierung eines Positionierstempels wird die Stanzhülse zurückgefahren und der Kleinfilter mittig gehalten, derart, dass der Rand umspritzt werden kann. Die Stanzhülse dichtet gleichzeitig den Spritzgussbereich ab.

Aus der GB980 617 ist ein Mehrfachstempel für eine Spritzgussform bekannt, wobei das zu stempelnde Material ausserhalb der Spritzgussform gestempelt und damit losgelöst und mit dem verlängerten Hub in die Spritzgussform zusammen mit einem achsidentischen Gegenstempel positioniert wird.

Aus der EP03 28 38A2ist eine Stempelvorrichtung für eine Spritzgussform bekannt. Der Gegenstempel ist in seinem Durchmesser kleiner als der Stempel zum Herauslösen des gewebartigen Filterelements aus einem Band. Dadurch kann das Filterelement auf einer Schulter im Produkt umspritzt werden.

### Nachteile des Standes der Technik

Die bisherigen Verfahren erlauben es nicht, sehr kleine Dekorteile automatisch passgenau zu platzieren. Eine von Hand ausgeführte Arbeit ist sehr zeitintensiv und Toleranzen unterworfen. Zudem ergibt sich die Problematik insbesondere bei beleuchteten transparenten Kunststoffen, dass Restklebespuren zu erkennen sind, die das an sich gewünschte Bild stören.

### Aufgabe der Erfindung

Daher besteht die Aufgabe der Erfindung ein Verfahren und eine Vorrichtung bereitzustellen, bei der auch kleine Dekorteile während des Spritzgussverfahrens verwendet werden können.

### Lösung der Aufgabe

Die Lösung der Aufgabe ist durch die Merkmale von Anspruch 1 gekennzeichnet.

### Vorteile der Erfindung

Der Grundgedanke der Erfindung besteht darin, dass sehr kleine Dekorteile, beispielsweise nur wenige Millimeter groß, vor dem eigentlichen Spritzgiessvorgang in der Spritzgussform eingelegt und dort positionsgerecht in der Spritzgussebene gehalten werden. Da die Dekorteile aber sehr klein sind, können diese nicht einfach vorab bereits eingelegt werden, sondern werden erfindungsgemäß durch einen Loslösestempel von einem Streifenelement entfernt und durch das Positionieren mit dem Loslösestempel und dem Zusammenwirken eines weiteren Stempels, nämlich einem Positionierstempel lagegerecht in der Spritzgussform gehalten. Dabei wird das Streifenelement in die Spitzgussform geführt und von dort das Dekorteil von dem Loslösestempel herausgelöst. Der gesamte Vorgang geschieht innerhalb der Spritzgussform.

Das Dekorteil wird durch den Loslösestempel in die Spritzgussebene geführt und dort von dem Positionsstempel aufgenommen, so dass Loslösestempel und Positionsstempel das Dekorteil einklemmen. Dadurch kann die Position des Dekorteils innerhalb der Spritzgussebene genau bestimmt werden. Ist die Vorderseite des Spritzgussteils der Seite des Positionierstempels zugewandt, so besteht die Möglichkeit, während des Spritzvorgangs den Loslösestempel wieder zurückzufahren, so dass die Rückseite des Dekorteils bearbeitet und eingespritzt werden kann. Aufgrund des Anspritzvorgangs und des weiteren Haltens durch den Positionierstempels wird verhindert, dass sich das Dekorteil verschiebt.

Dadurch können auch sehr kleine Dekorteile in einem Spritzgussteil verarbeitet werden, ohne dass es notwendig ist, das Stege zu den übrigen Dekorteilen verbleiben, die dann zusammen ein großes Dekorteil ergeben, welches bisher besser einzulegen war.

Die Anordnung von kleinen Dekorteilen bieten unter anderem die Möglichkeit, dass bei transparenten und durchleuchteten Spritzgussteilen, die Dektorteile einen Schriftzug darstellen. Vorzugsweise bestehen diese aus Metall, so dass diese die Durchleuchtung verhindern. Die übrigen Flächen bleiben transparent und können so durchleuchtet werden. Dadurch ist es nicht mehr notwendig, eine Metallfolie zu bearbeiten, die dann auf einen leuchtenden Kunststoffkörper aufgelegt wird, wobei das Licht dann durch die Aussparungen in der Metallfolie austritt. Dadurch sind auch eine Vielzahl von Darstellungen möglich, die durch die Metallfolie nicht möglich sind. Beispielsweise lässt sich der Buchstabe "B" sehr einfach durch das erfindungsgemäße Verfahren darstellen, in dem die beiden Freiflächen innerhalb des Buchstabens "B" durch jeweils ein Dekorteil dargestellt werden. Der Rand des Buchstabens "B" kann ebenfalls durch ein weiteres Dekorteil dargestellt werden. Somit ist der Buchstabe "B" ohne Stege sehr prägnant darstellbar.

Weitere vorteilhafte Ausgestaltungen gehen aus der nachfolgenden Beschreibung, den Zeichnungen sowie den Ansprüchen hervor.

### Zeichnungen

Es zeigen:
- Fig. 1: eine perspektivische Ansicht auf die Vorrichtung zur Durchführung des Verfahrens;
- Fig. 2: eine teilvergrößerte Ansicht auf das Formteil mit in Explosionsdarstellung gezeigter Matrize, wobei zur vereinfachten Darstellung die eine Hälfte der Matrize in einer entfernten Position dargestellt ist;
- Fig.3: eine gegenüber Fig. 2 weiter vergrößerte Ansicht auf das Formteil sowie den Loslösestempeln und den Positionierstempeln, wobei die Positionierstempel in Explosionsansicht gezeigt sind.

### Beschreibung eines Ausführungsbeispiels

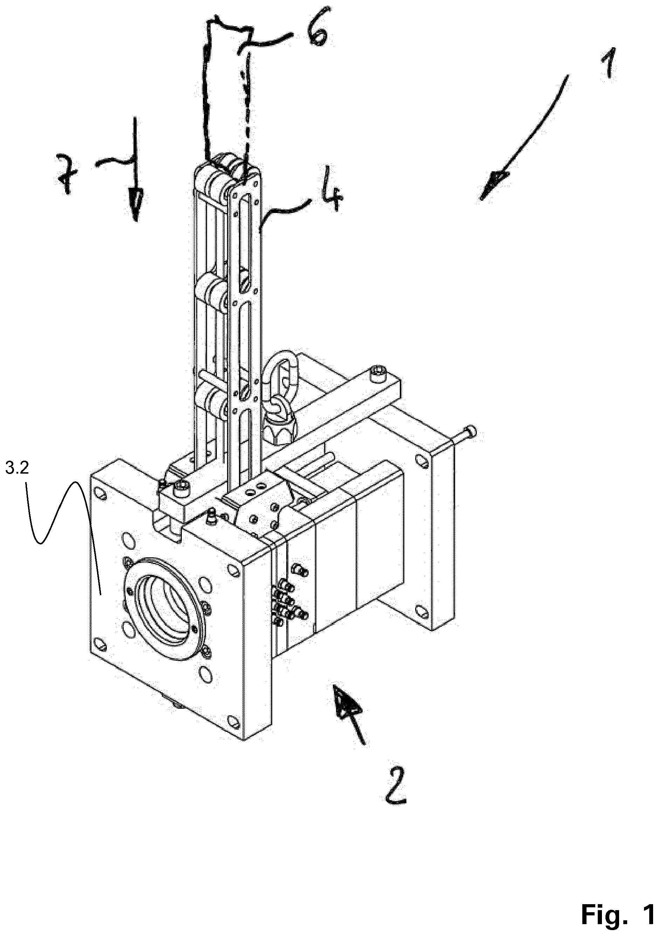

In den Fig. 1 bis 3 ist das Prinzip der Vorrichtung zur Durchführung des erfindungsgemäßen Verfahrens und damit zur Herstellung eines Formteils F gezeigt.

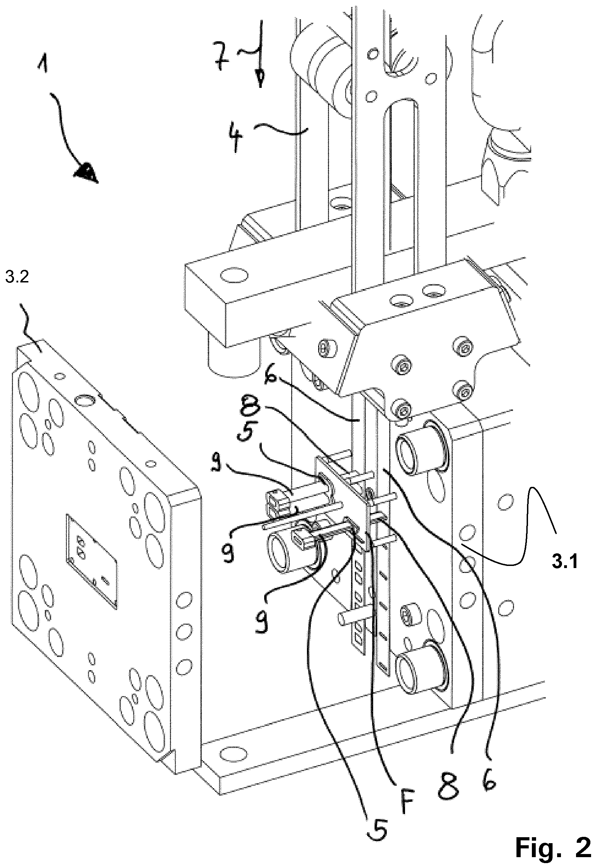

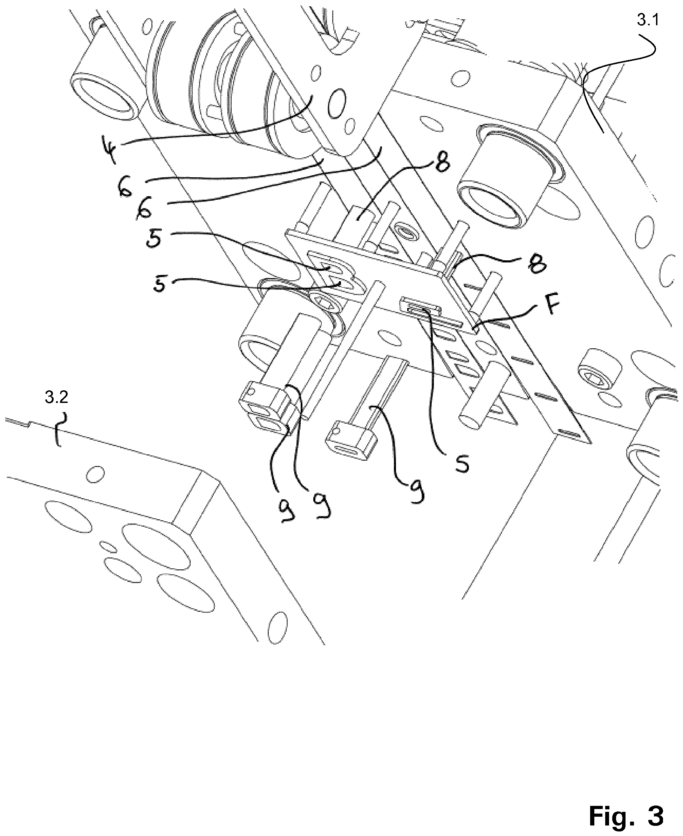

Die Vorrichtung 1 besteht im Wesentlichen aus der Spritzgussform 2, die unter anderem eine erste Matrize 3.1 und eine zweite Matrize 3.2 umfasst. Zudem ist eine Zufuhreinrichtung 4 für das zu positionierende Dekorteil 5 (in den Zeichnungen nur in Fig. 3 sichtbar, ansonsten in Fig. 2 durch den Positionierstempel 9 abgedeckt) vorgesehen. Diese transportiert das Dekorteil 5 auf einem Streifenelement 6 in Richtung eines Pfeils 7 in die Spritzgussform 2. Dort wird das Dekorteil 5 von einem Loslösestempel 8 von dem Streifenelement 6 entnommen, indem der Loslösestempel 8 die erste Matrize 3.1 durchdringt. Das zu spritzende Formteil F ist vorzugsweise auf Stegen angeordnet, so dass das Streifenelement 6 durch die Spritzgussform hindurchgeführt (hinter dem Spritzgussteil) werden kann, ohne dass dieses das Spritzgussergebnis beeinflusst. Die Entnahme kann beispielsweise durch Stanzen erfolgen.

Nach der Entnahme des Dekorteils 5 von dem Streifenelement 6 fährt zur Positionierung des Dekorteils 5 innerhalb der Spritzgussform 2 der Positionierstempel 9, gegenüberliegend und auf einer gemeinsamen Achse angeordnet wie der Loslösestempel 8, gegen das Dekorteil 5, derart, dass das Dekorteil 5 zwischen Loslösestempel 8 und Positionierstempel 9 dazwischen geklemmt und gehalten wird. Beide Stempel, sowohl der Loslösestempel 8 als auch der Positionierstempel 9 verfahren das Dekorteil 5 in die Position, in der es in der Spritzgussform 2 umspritzt werden soll. In einem weiteren Schritt wird das Dekorteil 5 in der Spritzgussform 2 hinterspritzt. Das Dekorteil 5 ist fixiert. Anschließend verfährt der Loslösestempel 8 zurück, so dass hinter dem Dekorteil 5 (auf der dem Positionierstempel 9 gegenüberliegenden Seite) Raum gegeben wird, um weiter den Spritzgussvorgang fortzusetzen.

Da der Loslösestempel 8 derart positioniert ist, dass dessen freies Ende mit der Oberfläche des Formteils F abschließt, ist es nicht notwendig, diesen während des Spritzgießvorgangs neu zu positionieren. Dies erfolgt erst wieder dann, wenn ein neues Formteil F hergestellt werden soll.

Der Loslösestempel 8 hat bei dieser Vorrichtung 1 unterschiedliche Funktionen: Der Loslösestempel 8 entnimmt dem Streifenelement 6 das Dekorteil 5. Entweder wird das Dekorteil 5 vollständig herausgestanzt, so dass der Loslösestempel 8 die Funktion eines Stanzstempels übernimmt, oder das Dekorteil 5 ist bereits auf dem Streifenelement 6 vorgestanzt und beispielsweise nur noch an drei Punkten an dem Streifenelement 6 angelenkt. Alternativ kann auch das Dekorteil 5 auf einem Trägermaterial, das dem Streifenelement 6 entspricht, aufgeklebt sein. Hier übernimmt dann der Loslösestempel 8 die Funktion des Trennens der Anlenkungen. Dies hat auch den Vorteil, dass weniger durch den mechanischen Vorgang des Trennens entstehende Material in die Spritzgussform gelangt. Zudem wirkt der Loslösestempel 8 mit dem Positionierstempel 9 zusammen, derart, dass der Loslösestempel 8 zusammen mit dem herausgelösten Dekorteil 5 an den Positionierstempel 9 heranfährt und das Dekorteil 5 zumindest zwischen beiden Stempeln gehalten wird.

Die Erfindung ist nicht auf die Verwendung eines Dekorteils beschränkt. Vielmehr kann auch das Dekorteil 5 ein Kontaktteil zur Herstellung einer elektrischen Verbindung, oder ein Teil zum Schutz von Abnutzungen (z.B. Kevlar) sein.

## Patentansprüche

1. Verfahren zur Erzeugung eines mit mindestens einem Dekorteil versehenen Formteils, umfassend eine Spritzgussform und eine Zuführeinrichtung für das Formteil, wobei die Spritzgussform mindestens eine Matrize umfasst, **gekennzeichnet durch** folgende Verfahrensschritte, nachdem die Spritzgussform geschlossen ist:
a) Zuführen des auf einem Streifenelement (6) angeordneten Dekorteils (5) in die im Wesentlichen aus einer ersten Matrize (3.1) und einer zweiten Matrize (3.2) bestehenden Spritzgussform (2);
b) Loslösen des Dekorteils (5) aus dem Streifenelement (6) über einen Loslösestempel (8), der durch die erste Matrize (3.1) der Spritzgussform (2) geführt wird;
c) Gleichzeitiges Zuführen eines Positionierstempels (9) in Richtung des Loslösestempels (8) durch die zweite Matrize (3.2) der Spritzgussform (2) und Klemmen des Dekorteils (5) zwischen den freien Enden des Loslösestempels (8) und des Positionierstempels (9) und Positionieren des Loslösestempels (8) und des Positionierstempels (9) innerhalb der Spritzgussform (2) derart, dass das Dekorteil (5) in der gewünschten Position ist;
d) In einem weiteren Schritt wird das Dekorteil (5) in der Spritzgussform (2) hinterspritzt, derart, dass das Dekorteil (5) ist fixiert;
e) anschließend verfährt der Loslösestempel (8) zurück, so dass hinter dem Dekorteil (5) auf der dem Positionierstempel (9) gegenüberliegenden Seite Raum gegeben wird, um weiter den Spritzgussvorgang fortzusetzen.

2. Vorrichtung zur Erzeugung eines mit mindestens einem Dekorteil versehenen Formteils, umfassend eine Spritzgussform und eine Zuführeinrichtung für das Formteil, wobei die Spritzgussform mindestens eine Matrize umfasst, **dadurch gekennzeichnet, dass** ein Loslösestempel (8) vorgesehen ist, der derart angeordnet ist, dass dieser bei einer geschlossenen Spritzgussform durch eine erste Matrize (3.1) hindurchdringt und von einem in die Spritzgussform (2) eingeführten Streifenelement (6) das darauf angeordnete Dekorteil (5) innerhalb der Spritzgussform (2) entfernt, wobei ein Positionierstempel (9) vorgesehen ist, der derart angeordnet ist, dass dieser die zweite Matrize (3.2) durchdringt und mit dem Loslösestempel (9) innerhalb der Spritzgussform (2) zusammenwirkt.

3. Vorrichtung nach Anspruch 2, **dadurch gekennzeichnet, dass** mehrere Loslösestempel (9) mit korrespondierenden Positionierstempel (8) vorgesehen ist.

## Claims

1. Method for producing a moulding provided with at least one decorative part, comprising an injection mould and an infeed installation for the moulding, wherein the injection mould comprises at least one die, **characterized by** the following method steps once the injection mould has been closed:
a) feeding the decorative part (5) that is disposed on a tape element (6) into the injection mould (2) which is composed substantially of a first die (3.1) and of a second die (3.2);
b) releasing the decorative part (5) from the tape element (6) by way of a release punch (8) which is guided through the first die (3.1) of the injection mould (2);
c) simultaneously feeding a positioning punch (9) in the direction of the release punch (8) through the second die (3.2) of the injection mould (2), and clamping the decorative part (5) between the free ends of the release punch (8) and of the positioning punch (9), and positioning the release punch (8) and the positioning punch (9) in such a manner within the injection mould (2) that the decorative part (5) is in the desired position;
d) in a further step, in-mould laminating the decorative part (5) in the injection mould (2) such that the decorative part (5) is fixed;
e) subsequently returning the release punch (8) such that space for the injection-moulding procedure to be continued is provided behind the decorative part (5), on that side that is opposite the positioning punch (9).

2. Device for producing a moulding that is provided with at least one decorative part, comprising an injection mould and an infeed installation for the moulding, wherein the injection mould comprises at least one die, **characterized in that** a release punch (8) is provided, said release punch (8) being disposed in such a manner that the latter in the case of a closed injection mould penetrates a first die (3.1) and within the injection mould (2) removes, from a tape element (6) that has been introduced into the injection mould (2), the decorative part (5) that is disposed on said tape element (2), wherein a positioning punch (9) which is disposed in such a manner that said positioning punch (9) penetrates the second die (3.2) and within the injection mould (2) interacts with the release punch (9) is provided.

3. Device according to Claim 2, **characterized in that** a plurality of release punches (9) having communicating positioning punches (8) are provided.

## Revendications

1. Procédé de fabrication d'une pièce moulée dotée d'au moins une partie décorative, comprenant un moule de moulage par injection et un dispositif d'alimentation pour la pièce moulée, dans lequel le moule de moulage par injection comprend au moins une matrice, **caractérisé par** les étapes de procédé suivantes, après que le moule de moulage par injection soit fermé:
a) amener la partie décorative (5) disposée sur un élément en bande (6) dans le moule de moulage par injection (2) composé essentiellement d'une première matrice (3.1) et d'une deuxième matrice (3.2);
b) séparer la partie décorative (5) de l'élément en bande (6) au moyen d'un poinçon de séparation (8), qui est guidé à travers la première matrice (3.1) du moule de moulage par injection (2);
c) simultanément amener un poinçon de positionnement (9) en direction du poinçon de séparation (8) à travers la deuxième matrice (3.2) du moule de moulage par injection (2) et serrer la partie décorative (5) entre les extrémités libres du poinçon de séparation (8) et du poinçon de positionnement (9) et positionner le poinçon de séparation (8) et le poinçon de positionnement (9) à l'intérieur du moule de moulage par injection (2), de telle manière que la partie décorative (5) se trouve dans la position désirée;
d) dans une autre étape, la partie décorative (5) est soumise à une pulvérisation par l'arrière dans le moule de moulage par injection (2), de telle manière que la partie décorative (5) soit fixée;
e) ensuite, le poinçon de séparation (8) revient en arrière, de telle manière qu'il se trouve derrière la partie décorative (8), sur le côté opposé au poinçon de positionnement (9), de l'espace pour poursuivre l'opération de moulage par injection.

2. Dispositif de fabrication d'une pièce moulée dotée d'au moins une partie décorative, comprenant un moule de moulage par injection et un dispositif d'alimentation pour la pièce moulée, dans lequel le moule de moulage par injection comprend au moins une matrice, **caractérisé en ce qu'**il est prévu un poinçon de séparation (8), qui est disposé de telle manière que celui-ci traverse une première matrice (3.1) lorsque le moule de moulage par injection est fermé et enlève d'un élément en bande (6) introduit dans le moule de moulage par injection (2) la partie décorative (5) disposée sur celui-ci à l'intérieur du moule de moulage par injection (2), dans lequel il est prévu un poinçon de positionnement (9), qui est disposé de telle manière que celui-ci traverse la deuxième matrice (3.2) et coopère avec le poinçon de séparation (9) à l'intérieur du moule de moulage par injection (2).

3. Dispositif selon la revendication 2, **caractérisé en ce qu'**il est prévu plusieurs poinçons de séparation (9) avec des poinçons de positionnement correspondants (8).
